# DEMANDE DE BREVET EUROPEEN

(11) **EP 4 749 449 A1**
(43) Date de publication de la demande: **27.05.2026**
(21) Numéro de dépôt: 25216524.6
(22) Date de dépôt: 18.11.2025
(51) Int. Cl.: G06F 9/48, G06F 9/50, G06F 9/54

(54) **MÉTHODE ET SYSTÈME DE TRAITEMENT PARALLÈLE D'UN PROGRAMME LOGICIEL CONSTITUÉ D'UNE PLURALITÉ DE BLOCS LOGICIELS REPÉRÉS PAR DES IDENTIFIANTS DE FONCTION**

(30) Priorité: 22.11.2024 FR 2412811
(71) Demandeur: Melodium, 44000 Nantes (FR)
(72) Inventeur: Vignaud, Quentin, 44000 NANTES (FR)
(74) Mandataire: Lequien, Philippe

(57) **Abrégé**

L'invention concerne une méthode de traitement massivement parallèle d'un programme logiciel, constitué d'une pluralité de blocs logiciels, par des moteurs d'exécution orchestrés par un orchestrateur informatique, comprenant :
- un paramétrage du programme logiciel consistant à incorporer des repères de début de bloc logiciel la forme d'un identifiant de fonction,
- le lancement sur une première machine mettant en œuvre un premier moteur d'exécution, par l'orchestrateur informatique, pour lui faire exécuter au moins deux blocs logiciels, le lancement incluant la transmission de l'identifiant de fonction des blocs logiciels et de paramètres d'entrée,
- l'exécution, par ledit premier moteur d'exécution, d'un premier bloc logiciel
- l'instanciation d'au moins un deuxième moteur d'exécution, pour lui faire exécuter au moins un deuxième des blocs logiciels, incluant la transmission de l'identifiant de fonction du deuxième des blocs logiciels,
- l'exécution, par le deuxième moteur d'exécution, du deuxième bloc logiciel,
- la réception, par le premier moteur d'exécution, de signaux de statut d'exécution produits par le deuxième moteur d'exécution.

## Description

### Domaine Technique

Le domaine de l'invention est celui des méthodes de traitement massivement parallèle de programmes logiciels. Le terme « massivement » ne doit toutefois pas être interprété comme exclusif d'un traitement logiciel à petit échelle.

### État de la technique

Selon les méthodes actuelles, l'exécution distribuée et l'orchestration logicielle d'un programme constitué d'une pluralité de blocs logiciels sont exécutées par au moins un orchestrateur informatique et une pluralité de moteurs d'exécution, ceci en utilisant concomitamment les composants suivants :
- un logiciel-cadriciel d'orchestration ;
- des machines virtuelles ou conteneurs logiciels ;
- des images de systèmes ou conteneurs ;
- des environnements logiciels permettant l'exécution du logiciel ;
- le logiciel en lui-même, dont l'exécution et l'orchestration sont visées.

Le logiciel-cadriciel d'orchestration est installé sur un ordinateur qui prend ensuite le rôle d'orchestrateur informatique. Les machines virtuelles ou conteneurs logiciels sont en pratique constitués par des moteurs d'exécution orchestrés par l'orchestrateur informatique.

Dans ce contexte, tout logiciel destiné à être exécuté de façon distribuée doit être conçu précisément en vue d'être distribué. En ce sens, sa conception prévoit la définition d'un ou de plusieurs points d'entrées correspondant à des blocs logiciels du logiciel à exécuter, que le logiciel-cadriciel d'orchestration peut spécifiquement appeler. Cela étant, les opérations ou calculs effectués dans le cadre de l'exécution du logiciel restent circonscrits au moteur d'exécution préalablement répertorié et identifié pour que des blocs logiciels du logiciel à exécuter soient instanciés par le logiciel-cadriciel d'orchestration, qui est donc paramétré avec une liste de moteurs d'exécution auquel il peut faire appel.

En d'autres termes, l'orchestrateur informatique n'orchestre que les moteurs d'exécution qui sont prévus pour travailler entre eux, c'est-à-dire qui sont paramétrés et préparés dans un environnement spécifique. En particulier, chaque moteur d'exécution est paramétré avec un point d'entrée d'un bloc logiciel du logiciel, ce moteur d'exécution étant donc destiné à n'exécuter que le bloc logiciel ou les blocs logiciels pour lesquels il est paramétré.

Classiquement, un logiciel a besoin d'un environnement d'exécution adéquat pour fonctionner. Cet environnement est la plupart du temps constitué du code du logiciel, de l'interpréteur correspondant, d'une configuration, et de quelques éléments de ressources. Cet environnement est propre à chaque système d'exploitation sous-jacent et architecture matérielle.

De plus, pour pouvoir être exécuté dans un environnement logiciel adéquat (le moteur d'exécution pouvant être soit une machine virtuelle soit un conteneur logiciel), l'environnement et le logiciel doivent avoir été préalablement préparés au sein d'images systèmes à destination de ces machines virtuelles ou d'images de conteneurs.

On parle de changement d'exécution lorsqu'il s'agit d'exécuter le logiciel sur une machine plus puissante ou de le distribuer sur plusieurs machines et l'exécuter en parallèle. Alors, le logiciel-cadriciel d'orchestration doit appeler de nouveaux moteurs d'exécution (qu'il s'agisse d'une machine virtuelle ou de conteneur logiciel), et des blocs logiciels du logiciel peuvent y être exécutés en se basant sur les images systèmes ou les images de conteneurs désignés.

Avec les méthodes de traitements parallèles existantes, les différentes entités d'exécution du logiciel sont indépendantes et cloisonnées par défaut. À chaque démarrage d'un moteur d'exécution, le processus d'exécution est repris à zéro. Les technologies et langages de développement logiciel demandent alors un effort particulier de conception pour rendre différentes entités d'exécutions communicantes entre elles.

### Problème technique

L'invention a notamment pour objectif de pallier ces inconvénients de l'art antérieur.

Plus précisément, l'invention a pour objectif de proposer une méthode de traitement massivement parallèle d'un programme logiciel qui s'affranchisse de la nécessité de prédéfinir des points d'entrées de blocs logiciels distribuables et, concomitamment, de configurer des machines pour les attitrer à l'exécution de certains blocs logiciels du logiciel à exécuter.

L'invention a également pour objectif de fournir une telle méthode qui évite de devoir préparer, sur les différents moteurs d'exécution attitrés, un environnement logiciel adéquat, c'est-à-dire compatible avec la conception du logiciel à exécuter.

En ce sens, l'invention a également pour objectif de fournir une telle méthode qui évite de devoir préparer des images systèmes ou conteneurs appropriés à l'exécution du logiciel.

Encore un autre objectif de l'invention est de fournir une telle méthode qui ne limite pas l'exécution du logiciel distribué par un système d'exploitation ou une architecture matérielle précise des moteurs d'exécution.

### Résumé de l'invention

Ces objectifs, ainsi que d'autres qui apparaîtront par la suite, sont atteints grâce à l'invention qui a pour objet une méthode de traitement massivement parallèle d'un programme logiciel, constitué d'une pluralité de blocs logiciels, par des moteurs d'exécution orchestrés par au moins un orchestrateur informatique, caractérisée en ce qu'elle comprend :
- un paramétrage du programme logiciel consistant à incorporer des repères de début de bloc logiciel, chaque repère prenant la forme d'un identifiant de fonction attribué audit bloc logiciel,
- le lancement sur une première machine, mettant en œuvre un premier processeur et une première mémoire, d'un premier moteur d'exécution par l'orchestrateur informatique, pour lui faire exécuter au moins deux blocs logiciels, le lancement incluant la transmission de l'identifiant de fonction des blocs logiciels et de paramètres d'entrée,
- l'exécution, par ledit premier moteur d'exécution, d'un premier desdits blocs logiciels,
- l'instanciation d'au moins un deuxième moteur d'exécution par un orchestrateur informatique à la demande du premier moteur d'exécution, pour lui faire exécuter au moins un deuxième des blocs logiciels, l'instanciation incluant la transmission de l'identifiant de fonction du deuxième des blocs logiciels et de paramètres d'entrée,
- l'exécution, par le deuxième moteur d'exécution, du deuxième desdits blocs logiciels,
- la réception, par le premier moteur d'exécution, de signaux de statut d'exécution produits par le deuxième moteur d'exécution, les signaux de statut d'exécution étant transmis avec l'identifiant de fonction du deuxième bloc logiciel exécuté par le deuxième moteur d'exécution.

Avec la méthode de traitement parallèle d'un programme logiciel selon l'invention, on s'affranchit de la nécessité d'effectuer une constitution d'images système ou d'images de conteneurs spécifiques. En effet, les moteurs d'exécution sont capables d'échanger directement entre eux l'implémentation pertinente à leurs tâches respectives, ainsi que de faire transiter les données, d'entrées ou de sorties, nécessaires à la bonne exécution de ces tâches, jusqu'à l'achèvement de celle-ci.

Le paramétrage du programme logiciel permet de déterminer des identifiants de fonctions attribués aux blocs logiciels, ces identifiants de fonctions remplaçant avantageusement les points d'entrées classiquement utilisés dans l'art antérieur et qui nécessitent en prérequis du traitement parallèle du programme, l'affectation, et donc le recensement de moteurs d'exécution pour chaque point d'entrée. Au contraire, avec une méthode selon l'invention, avec les identifiants de fonction, on obtient une granularité plus fine et une distribution possiblement arbitraire en fonction des besoins et contraintes, sans redéfinir la conception du logiciel ou impacter son implémentation.

**Il** en résulte que l'orchestration du logiciel est assouplie et la charge de distribution allégée, le logiciel-cadriciel d'orchestration n'ayant plus à gérer l'instanciation du logiciel visé, les moteurs d'exécution se trouvant capables de le faire directement, la transmission des éléments nécessaires à l'exécution des tâches étant effectuées par ces moteurs également, sans recourir à des images préparées à l'avance et nécessitant des lancements spécifiques de machines ou de conteneurs.

Selon une solution particulièrement avantageuse, la transmission des blocs logiciels aux moteurs d'exécution est réalisée sous une forme intermédiaire obtenue par l'exécution des étapes suivantes :
- inventaire des éléments nécessaires (c'est-à-dire les éléments dont dépend directement ou indirectement un bloc logiciel dans son implémentation), pour chaque bloc logiciel, par un moteur d'exécution émetteur depuis l'identifiant de fonction du bloc logiciel ;
- transcription d'éléments nécessaires inventoriés vers une représentation d'objets sérialisables, incluant leurs descriptions et leurs implémentations logiques (on entend par « descriptions logiques » la liste des identifiants, des paramètres, des caractéristiques des entrées et des sorties, et des propriétés logiques associées) ;

- sérialisation des objets sérialisables et transmission de ceux-ci à au moins un deuxième moteur d'exécution ;
- reconstruction des « éléments nécessaires » sur la base des représentations faites par les objets (c'est-à-dire la réception et la désérialisation des objets par un moteur récepteur, et reconstruction des éléments sur la base de la représentation contenue par les objets), incluant une implémentation logique de ceux-ci ;
- interprétation de l'implémentation logique et exécution sur le moteur récepteur des éléments nécessaires depuis l'identifiant de fonction du bloc logiciel transmis.

Grâce à cette caractéristique, il n'est plus nécessaire de considérer les systèmes d'exploitation et architectures matérielles sur lesquels le logiciel visé s'exécute, le moteur d'exécution faisant office de seul support d'exécution du logiciel.

En d'autres termes, les blocs logiciels du programme logiciel à exécuter peuvent être distribués et exécutés sur des moteurs d'exécution mis en œuvre sur des machines qui peuvent présenter des architectures physiques différentes, se différenciant notamment par une architecture de processeurs ou de jeux d'instructions.

Selon une solution avantageuse, le lancement sur la première machine du premier moteur d'exécution par l'orchestrateur informatique, pour lui faire exécuter au moins deux blocs logiciels, est inclus à une instanciation.

De cette façon, la première machine n'est pas nécessairement équipée du ou des blocs logiciels que son moteur d'exécution doit exécuter après le lancement par l'orchestrateur informatique. Au contraire, le moteur d'exécution d'une machine informatique quelconque en lien avec l'orchestrateur informatique peut être lancée par ce dernier.

Selon une caractéristique avantageuse, le lancement ou l'instanciation du deuxième moteur d'exécution par le premier moteur d'exécution est exécuté si le processeur de la première machine atteint un niveau de charge prédéterminé, et préférentiellement si le processeur de la première machine atteint un niveau de charge de 85%.

Selon une autre caractéristique avantageuse, complémentaire ou alternative du niveau de charge de processeur de la première machine, la lancement ou l'instanciation du deuxième moteur d'exécution par le premier moteur d'exécution est exécutée si la mémoire de la première machine atteint un niveau d'occupation prédéterminé, et préférentiellement si la mémoire de la première machine atteint un niveau d'occupation de 85%.

Selon encore une autre possibilité, le lancement ou l'instanciation du deuxième moteur d'exécution par le premier moteur d'exécution est exécuté si le processeur de la première machine atteint un niveau de charge de 70% et la mémoire de la première machine un niveau d'occupation de 70%.

Alternativement au lancement ou l'instanciation du deuxième moteur d'exécution par le premier moteur d'exécution selon le niveau de charge du processeur de la première machine ou le niveau d'occupation de sa mémoire, il est possible que la demande d'instanciation du deuxième moteur d'exécution par le premier moteur d'exécution auprès de l'orchestrateur informatique soit déclenchée de manière programmée par une partie du bloc logiciel exécuté au sein de ce premier moteur d'exécution.

Selon une solution préférentielle, la méthode comprend un rafraîchissement des paramètres d'entrée transmis lors de l'instanciation du premier moteur et/ou des paramètres d'entrée transmis lors de l'instanciation du deuxième moteur ou des moteurs d'exécution successifs si d'autres moteurs d'exécution sont lancés dans le cadre de la méthode selon l'invention.

On peut de cette façon réactualiser les paramètres d'entrée au fur et à mesure de l'exécution des tâches par le ou les moteurs d'exécution amont.

Selon une solution avantageuse, la méthode selon l'invention comprend la réception, par l'orchestrateur informatique, d'un signal d'achèvement produit par le premier moteur d'exécution, l'émission du signal d'achèvement étant accompagnée du déchargement du premier bloc logiciel du premier moteur d'exécution.

Également avantageusement, la méthode comprend la réception, par le premier moteur, d'un signal d'achèvement produit par le deuxième moteur d'exécution, l'émission du signal d'achèvement étant accompagnée du déchargement du deuxième bloc logiciel du deuxième moteur d'exécution.

Cette caractéristique peut être reproduite autant de fois qu'il y a de moteurs d'exécution lancés dans le cadre de la méthode selon l'invention.

On comprend qu'une telle caractéristique permet d'éviter l'encombrement de la mémoire du moteur d'exécution utilisé lors de la distribution parallèle des blocs logiciels.

L'invention concerne également un système de gestion d'un traitement massivement parallèle d'un programme logiciel constitué d'une pluralité de blocs logiciels, mettant en œuvre des moteurs d'exécution orchestrés par au moins un orchestrateur informatique mettant en œuvre un processeur et une mémoire d'orchestrateur, caractérisé en ce que :
- le programme logiciel comprend des repères de début de bloc logiciel, chaque repère prenant la forme d'un identifiant de fonction attribué audit bloc logiciel,
- l'orchestrateur informatique est configuré pour lancer un premier moteur d'exécution, pour lui faire exécuter au moins deux blocs logiciels, le lancement incluant la transmission de l'identifiant de fonction des blocs logiciels et de paramètres d'entrée,
- ledit premier moteur d'exécution lancé exécute un premier desdits blocs logiciels,
- l'orchestrateur informatique est paramétré pour instancier un deuxième moteur d'exécution à la demande du premier moteur d'exécution, pour lui faire exécuter au moins un deuxième des blocs logiciels, l'instanciation incluant la transmission de l'identifiant de fonction du deuxième des blocs logiciels et de paramètres d'entrée,
- le deuxième moteur d'exécution instancié exécute le deuxième desdits blocs logiciels, échange avec le premier moteur d'exécution les données des entrées et des sorties, et émet au premier moteur d'exécution des signaux de statut d'exécution transmis avec l'identifiant de fonction du deuxième bloc logiciel exécuté par le deuxième moteur d'exécution.

### Brève description des dessins

D'autres caractéristiques et avantages de l'invention apparaîtront plus clairement à la lecture de la description suivante de différents modes de réalisation préférentiels de l'invention, donnés à titre de simples exemples illustratifs et non limitatifs, et des dessins annexés parmi lesquels :
- la figure 1 illustre schématiquement une méthode et un système d'orchestration de moteurs d'exécution, selon le principe de l'invention ;
- la figure 2 illustre schématiquement des échanges entre deux moteurs d'exécution pour distribuer la charge de travail et la transmission de données dans le cadre d'une méthode selon l'invention ;
- la figure 3 illustre schématiquement une arborescence de traitements composant un programme logiciel ;
- la figure 4 illustre schématiquement des liens d'entrée et sorties existant entre les traitements illustrés en figure 3 ;
- la figure 5 illustre schématiquement une méthode et un système de traitement parallèle d'un programme logiciel, selon le principe de l'invention.

### Description détaillée

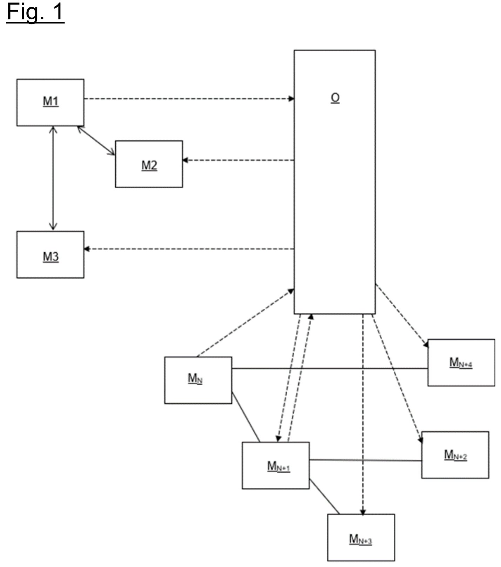

En référence à la figure 1, une méthode de traitement massivement parallèle d'un programme logiciel met classiquement en oeuvre des moteurs d'exécution M orchestrés par au moins un orchestrateur informatique O, le programme logiciel étant constitué d'une pluralité de blocs logiciels.

Selon le principe de l'invention, le programme logiciel est paramétré de façon à incorporer des repères de début de blocs logiciels, chacun de ces repères prenant la forme d'un identifiant de fonction attribué audit bloc logiciel. En outre, la conception du programme logiciel prévoit également l'incorporation au bloc logiciel de la définition d'un nombre quelconque de paramètres d'entrée et de signaux de statuts d'exécution associés à chaque bloc logiciel.

La conception du programme logiciel prévoit également l'incorporation au bloc logiciel de la définition d'un nombre quelconque d'entrées et de sorties.

Tel qu'illustré par la figure 1, la méthode selon l'invention prévoit le lancement d'un premier moteur d'exécution M1, par l'orchestrateur informatique O, en vue de lui faire exécuter au moins deux blocs logiciels (en pratique, une pluralité de blocs logiciels). Le lancement par l'orchestrateur informatique est inclus à une instanciation et comprend la transmission, au premier moteur d'exécution M1, de l'identifiant de fonction de chacun des blocs logiciels et des paramètres d'entrée associées à chacun des blocs logiciels.

Le premier moteur d'exécution M1 exécute au moins un premier des blocs logiciels reçus et transmet, à l'orchestrateur informatique O, une demande d'instanciation d'au moins un deuxième moteur d'exécution M2, en vue de lui faire exécuter au moins un deuxième des blocs logiciels. L'instanciation du deuxième moteur d'exécution M2 inclut la transmission de l'identifiant de fonction du deuxième bloc logiciel (ou des nièmes blocs logiciels) et de ses (leurs) paramètres d'entrée.

Le deuxième moteur d'exécution M2 exécute le deuxième bloc logiciel, et échange les données des entrées et des sorties, et transmet au premier moteur d'exécution M1 des signaux de statuts d'exécution et l'identifiant de fonction du deuxième bloc logiciel qu'il a exécuté.

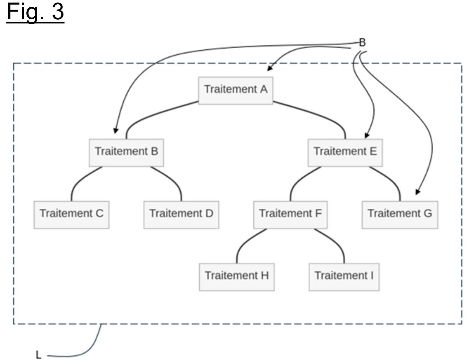

Tel que cela apparaît sur la figure 3, le programme logiciel L peut comprendre une pluralité de blocs logiciels B susceptibles d'être distribués sur une pluralité de moteurs d'exécution M, chaque bloc logiciel étant destiné à exécuter un traitement (Traitement A, Traitement B, Traitement C...). Ainsi tel qu'illustré en figure 1, le premier moteur d'exécution M1 peut émettre à l'orchestrateur informatique O une demande d'instanciation du deuxième moteur d'exécution M2, mais aussi, pour un ou plusieurs autres blocs logiciels, une demande d'instanciation d'un troisième moteur d'exécution M3.

L'orchestrateur informatique peut quant à lui non seulement lancer le premier moteur d'exécution M1 mais également un autre moteur d'exécution M_{N} qui lui-même peut émettre à l'orchestrateur informatique O une demande d'instanciation des moteurs d'exécution M_{N+1} et M_{N+4}, le moteur d'exécution M_{N+1} pouvant à son tour demander l'instanciation de moteur d'exécution M_{N+2} et M_{N+3}.

En d'autres termes, la méthode selon l'invention peut mettre en œuvre une pluralité de moteurs d'exécution aptes à exécuter un ou plusieurs blocs logiciels du programme logiciel, chaque moteur d'exécution ayant la capacité d'échanger un nombre quelconque de flux de données constitués par les paramètres d'entrée et les signaux de statuts d'exécution, par les entrées et les sorties associés aux blocs logiciels exécutés par chaque moteur d'exécution.

On considère par la suite que chaque moteur d'exécution exécute un ou plusieurs blocs logiciels que l'on désigne par la suite par le terme « traitement ».

Pour chaque traitement, la transcription du ou des blocs logiciels est réalisée sous une forme intermédiaire représentant l'ensemble des éléments nécessaires à son implémentation logique, indépendamment de toute caractéristique propre à la machine incluant le moteur d'exécution, ainsi qu'indépendamment de l'environnement du système d'exploitation.

Pour se faire, la transcription du ou des blocs logiciels est réalisée de la façon suivante :
- inventaire, par un moteur d'exécution émetteur depuis l'identifiant de fonction du bloc logiciel, des éléments nécessaires dont dépend directement ou indirectement un bloc logiciel dans son implémentation, ceci pour chaque bloc logiciel, ;
- transcription d'éléments nécessaires inventoriés vers une représentation d'objets sérialisables, incluant leurs descriptions (identifiants, paramètres, caractéristiques des entrées et des sorties, propriétés logiques associées) et leurs implémentations logiques ;
- reconstruction des « éléments nécessaires » sur la base des représentations faites par les objets, c'est-à-dire la réception et la désérialisation des objets par un moteur récepteur, et reconstruction des éléments sur la base de la représentation contenue par les objets), incluant une implémentation logique de ceux-ci ;
- interprétation de l'implémentation logique et exécution sur le moteur récepteur des éléments nécessaires depuis l'identifiant de fonction du bloc logiciel transmis.

Chacun des éléments nécessaires est représenté dans un objet logique, comprenant la description et l'implémentation de l'élément. Ces objets logiques sont faits de façon à être sérialisables, et leur représentation après sérialisation est envoyée.

Considérant l'exemple de la figure 1, cela peut se traduire au niveau des moteurs d'exécution M1, M2 et M3 de la façon suivante.

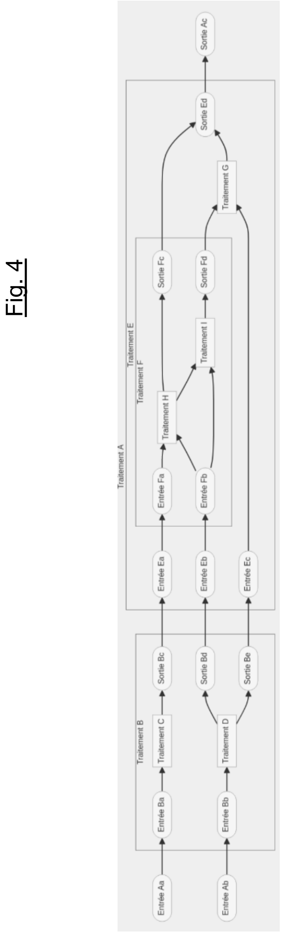

En considérant un programme logiciel comme illustré en figure 4, disposant de traitements reposant sur d'autres traitements, tel que le Traitement A utilise le Traitement B et le Traitement E. Les entrées Aa et Ab du Traitement A étant respectivement connectées aux entrées Ba et Bb du Traitement B. Les sorties Bc, Bd, et Be du Traitement B étant connectées aux entrées Ea, Eb, Ec du Traitement E, elles-mêmes notamment connectées aux entrées Fa et Fb du traitement F, dont les sorties Fc et Fd sont connectées au sein du Traitement E.

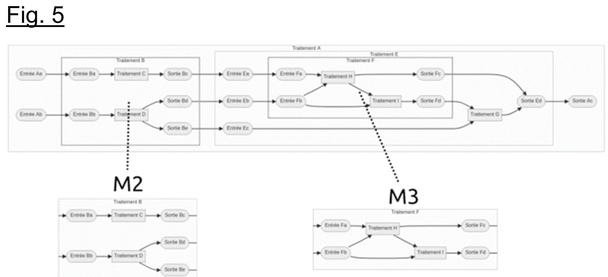

Comme illustré en figure 5, le moteur M1 exécute le traitement A, et a transmis au moteur M2 le Traitement B que ce moteur M2 exécute. De la même manière, le moteur M1 a transmis au moteur M3 le Traitement F que ce moteur M3 exécute. Les données reçues sur les entrées Aa et Ab du Traitement A par le moteur M1 sont envoyées par le moteur M1 au moteur M2 pour être reçues sur les entrées Ba et Bb du Traitement B. Similairement, les données envoyées sur les sorties Bc, Bd, et Be du Traitement B dans le moteur M2 sont envoyées par le moteur M2 pour être reçues par le moteur M1 sur les entrées Ea, Eb, et Ec du Traitement E. Par le même procédé, les données reçues sur les entrées Ea et Eb du Traitement E par le moteur M1 sont envoyées au moteur M3 pour être reçues sur les entrées Fa et Fb du Traitement F. Les données envoyées par les sorties Fc et Fd du Traitement F sur le moteur M3 sont envoyées par le moteur M3 au moteur M1 pour être reçues par le Traitement G et la sortie Ed.

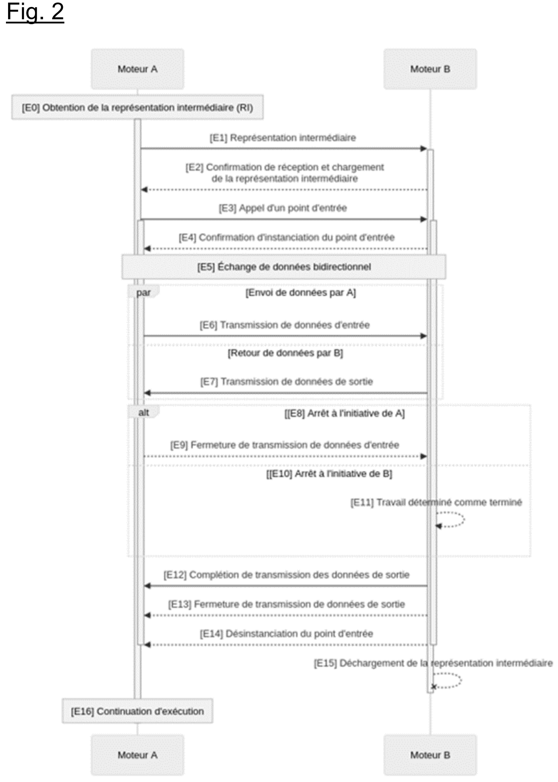

La figure 2 illustre schématiquement les échanges entre deux moteurs d'exécution, par exemple les moteurs d'exécution M1 et M2.

Dans un premier temps, le moteur d'exécution M1 transcrit le ou les blocs logiciels à faire exécuter par le bloc M2 sous une forme intermédiaire telle que décrit précédemment (étape E0).

Cette représentation intermédiaire est alors transmise au moteur M2 (étape E1). Le moteur d'exécution M2 confirme la réception et le chargement de la représentation intermédiaire du ou des blocs logiciels et émet pour cela un signal à destination du moteur d'exécution M1 (étape E2).

L'instanciation s'exécute avec la transmission de paramètres d'entrée (étape E3) et le moteur d'exécution M2 envoie au moteur d'exécution M1 un signal de confirmation d'instanciation avec réception des paramètres d'entrée.

L'exécution du ou des blocs logiciels par le moteur d'exécution M2 peut conduire à un échange de données bidirectionnelles (étape E5), comprenant l'envoi de données sur les entrées, par le moteur d'exécution M1 à destination du moteur d'exécution M2 (étape E6), ce dernier émettant quant à lui des données de sortie au moteur d'exécution M1 (étape E7).

L'arrêt de l'exécution du ou des blocs logiciels par le moteur d'exécution M2 peut être déclenché à l'initiative du moteur d'exécution M1 (étape E8), ceci se concrétisant par la fermeture de la transmission de données d'entrée (étape E9).

Alternativement, l'arrêt de l'exécution du ou des blocs logiciels par le moteur d'exécution M2 peut être déclenché de sa propre initiative (étape E10), le ou les blocs logiciels exécutés étant programmés avec une instruction d'achèvement (étape E11).

Dans l'un ou l'autre cas, il s'ensuit une étape de complétion de transmission de données de sortie (étape E12) et la fermeture de la transmission de données de sortie (étape E13).

Ceci est suivi par une étape E14 d'émission de signal d'achèvement du bloc logiciel exécuté par le moteur d'exécution M2, ce qui s'accompagne d'un déchargement de la représentation intermédiaire à partir du moteur d'exécution M2 (étape E15).

Le moteur d'exécution M1 peut quant à lui continuer à exécuter le ou les blocs logiciels pour lequel il a été lancé (étape E16).

L'exécution du ou des blocs logiciels par le moteur d'exécution M1 se poursuit jusqu'à l'émission d'un signal d'achèvement par le moteur d'exécution M1 à destination de l'orchestrateur informatique, l'envoi de ce signal d'achèvement étant accompagné du déchargement du premier bloc logiciel par le premier moteur M1.

On note que le lancement ou l'instanciation du deuxième moteur d'exécution M2 par le premier moteur d'exécution M1 est exécuté si le processeur de la première machine incluant le premier moteur d'exécution M1 atteint un niveau de charge prédéterminé, qui peut être prédéterminé à 85%. Ce lancement ou cette instanciation du deuxième moteur d'exécution M2 par le premier moteur d'exécution M1 peut aussi être exécuté si la mémoire de la première machine atteint un niveau d'occupation prédéterminé, qui peut être fixé à 85%. Le lancement ou l'instanciation du deuxième moteur d'exécution peut aussi être exécuté si deux conditions sont remplies simultanément, à savoir si le processeur de la première machine atteint un niveau de charge de 70% et la mémoire de la première machine un niveau d'occupation de 70%.

La demande d'instanciation du deuxième moteur d'exécution M2 par le premier moteur d'exécution M1 auprès de l'orchestrateur informatique O peut aussi être déclenchée de manière programmée par une partie du bloc logiciel exécuté par le premier moteur d'exécution M1.

La méthode de traitement parallèle d'un programme logiciel qui vient d'être décrite est exécutée par un système de gestion de ce traitement mettant en œuvre les moteurs d'exécution M orchestrés par l'orchestrateur informatique, avec un logiciel qui comprend des repères de début de blocs logiciels prenant la forme d'identifiants de fonction attribués aux blocs logiciels.

Dans un tel système, l'orchestrateur informatique est configuré pour lancer le premier moteur d'exécution M1 pour lui faire exécuter au moins deux blocs logiciels, ce lancement s'accompagnant de la transmission du ou des identifiants de fonction des blocs logiciels, ainsi que de paramètres d'entrée.

Le premier moteur d'exécution M1 exécute les blocs logiciels et est paramétré pour demander à l'orchestrateur informatique d'instancier un deuxième moteur d'exécution, pour lui faire exécuter au moins un deuxième des blocs logiciels, cette instanciation incluant la transmission de l'identifiant de fonction du deuxième des blocs logiciels ainsi que de paramètres d'entrée.

Le deuxième moteur d'exécution M2 instancié exécute le deuxième bloc logiciel et retourne au premier moteur d'exécution M2 des signaux de statuts d'exécution accompagnés de l'identifiant de fonction du deuxième bloc logiciel exécuté.

Comme indiqué précédemment, un tel système n'est pas limité quant au nombre de moteurs d'exécution mis à contribution, lancés ou instanciés chacun selon la méthode décrite précédemment entre le premier moteur d'exécution M1 et le deuxième moteur d'exécution M2.

## Revendications

1. Méthode de traitement massivement parallèle d'un programme logiciel, constitué d'une pluralité de blocs logiciels, par des moteurs d'exécution orchestrés par au moins un orchestrateur informatique, **caractérisée en ce qu'**elle comprend :
- un paramétrage du programme logiciel consistant à incorporer des repères de début de bloc logiciel, chaque repère prenant la forme d'un identifiant de fonction attribué audit bloc logiciel,
- le lancement sur une première machine, mettant en œuvre un premier processeur et une première mémoire, d'un premier moteur d'exécution par l'orchestrateur informatique, pour lui faire exécuter au moins deux blocs logiciels, le lancement incluant la transmission de l'identifiant de fonction des blocs logiciels et de paramètres d'entrée,
- l'exécution, par ledit premier moteur d'exécution, d'un premier desdits blocs logiciels,
- l'instanciation d'au moins un deuxième moteur d'exécution par un orchestrateur informatique à la demande du premier moteur d'exécution, pour lui faire exécuter au moins un deuxième des blocs logiciels, l'instanciation incluant la transmission de l'identifiant de fonction du deuxième des blocs logiciels et de paramètres d'entrée,
- l'exécution, par le deuxième moteur d'exécution, du deuxième desdits blocs logiciels,
- la réception, par le premier moteur d'exécution, de signaux de statut d'exécution produits par le deuxième moteur d'exécution, les signaux de statut d'exécution étant transmis avec l'identifiant de fonction du deuxième bloc logiciel exécuté par le deuxième moteur d'exécution.

2. Méthode de traitement massivement parallèle d'un programme logiciel selon la revendication 1, **caractérisée en ce que** la transmission des blocs logiciels aux moteurs d'exécution est réalisée sous une forme intermédiaire obtenue par l'exécution des étapes suivantes :
- inventaire, par un moteur d'exécution émetteur depuis l'identifiant de fonction du bloc logiciel, des éléments nécessaires dont dépend directement ou indirectement un bloc logiciel dans son implémentation, ceci pour chaque bloc logiciel, ;
- transcription d'éléments nécessaires inventoriés vers une représentation d'objets sérialisables, incluant leurs descriptions (identifiants, paramètres, caractéristiques des entrées et des sorties, propriétés logiques associées) et leurs implémentations logiques ;
- reconstruction des « éléments nécessaires » sur la base des représentations faites par les objets, c'est-à-dire la réception et la désérialisation des objets par un moteur récepteur, et reconstruction des éléments sur la base de la représentation contenue par les objets), incluant une implémentation logique de ceux-ci ;
- interprétation de l'implémentation logique et exécution sur le moteur récepteur des éléments nécessaires depuis l'identifiant de fonction du bloc logiciel transmis.

3. Méthode de traitement massivement parallèle d'un programme logiciel selon l'une des revendications 1 et 2, **caractérisé en ce que** le lancement sur la première machine, du premier moteur d'exécution par l'orchestrateur informatique, pour lui faire exécuter au moins deux blocs logiciels, est inclus à une instanciation.

4. Méthode de traitement massivement parallèle d'un programme logiciel selon l'une quelconque des revendications précédentes, **caractérisée en ce que** le lancement ou l'instanciation du deuxième moteur d'exécution par le premier moteur d'exécution est exécutée si le processeur de la première machine atteint un niveau de charge prédéterminé.

5. Méthode de traitement massivement parallèle d'un programme logiciel selon la revendication 4, **caractérisée en ce que** le lancement ou l'instanciation du deuxième moteur d'exécution par le premier moteur d'exécution est exécutée si le processeur de la première machine atteint un niveau de charge de 85%.

6. Méthode de traitement massivement parallèle d'un programme logiciel selon l'une quelconque des revendications précédentes, **caractérisée en ce que** le lancement ou l'instanciation du deuxième moteur d'exécution par le premier moteur d'exécution est exécutée si la mémoire de la première machine atteint un niveau d'occupation prédéterminé.

7. Méthode de traitement massivement parallèle d'un programme logiciel selon la revendication 6, **caractérisée en ce que** le lancement ou l'instanciation du deuxième moteur d'exécution par le premier moteur d'exécution est exécutée si la mémoire de la première machine atteint un niveau d'occupation de 85 %.

8. Méthode de traitement massivement parallèle d'un programme logiciel selon l'une quelconque des revendications 1 à 4, **caractérisée en ce que** le lancement ou l'instanciation du deuxième moteur d'exécution par le premier moteur d'exécution est exécutée si le processeur de la première machine atteint un niveau de charge de 70 % et la mémoire de la première machine un niveau d'occupation de 70 %.

9. Méthode de traitement massivement parallèle d'un programme logiciel selon l'une quelconque des revendications précédentes, **caractérisée en ce que** la demande d'instanciation du deuxième moteur d'exécution par le premier moteur d'exécution auprès de l'orchestrateur est déclenchée de manière programmée par une partie du bloc logiciel exécuté au sein de ce premier moteur d'exécution.

10. Méthode de traitement massivement parallèle d'un programme logiciel selon l'une quelconque des revendications précédentes, **caractérisée en ce qu'**elle comprend au moins un rafraîchissement des paramètres d'entrée transmis lors de l'instanciation du deuxième moteur d'exécution.

11. Méthode de traitement massivement parallèle d'un programme logiciel selon l'une quelconque des revendications précédentes, **caractérisée en ce qu'**elle comprend la réception, par l'orchestrateur informatique, d'un signal d'achèvement produit par le premier moteur d'exécution, l'émission du signal d'achèvement étant accompagnée du déchargement du premier bloc logiciel du premier moteur d'exécution.

12. Méthode de traitement massivement parallèle d'un programme logiciel selon l'une quelconque des revendications précédentes, **caractérisée en ce qu'**elle comprend la réception, par le premier moteur d'exécution, d'un signal d'achèvement produit par le deuxième moteur d'exécution, l'émission du signal d'achèvement étant accompagnée du déchargement du deuxième bloc logiciel du deuxième moteur d'exécution.

13. Système de gestion d'un traitement massivement parallèle d'un programme logiciel constitué d'une pluralité de blocs logiciels, mettant en œuvre des moteurs d'exécution orchestrés par au moins un orchestrateur informatique mettant en œuvre un processeur et une mémoire d'orchestrateur, **caractérisé en ce que** :
- le programme logiciel comprend des repères de début de bloc logiciel, chaque repère prenant la forme d'un identifiant de fonction attribué audit bloc logiciel,
- l'orchestrateur informatique est configuré pour lancer un premier moteur d'exécution, pour lui faire exécuter au moins deux blocs logiciels, le lancement incluant la transmission de l'identifiant de fonction des blocs logiciels et de paramètres d'entrée,
- ledit premier moteur d'exécution lancé exécute un premier desdits blocs logiciels,
- l'orchestrateur informatique est paramétré pour instancier un deuxième moteur d'exécution à la demande du premier moteur d'exécution, pour lui faire exécuter au moins un deuxième des blocs logiciels, l'instanciation incluant la transmission de l'identifiant de fonction du deuxième des blocs logiciels et de paramètres d'entrée,
- le deuxième moteur d'exécution instancié exécute le deuxième desdits blocs logiciels, échange avec le premier moteur d'exécution les données des entrées et des sorties et émet au premier moteur d'exécution des signaux de statut d'exécution transmis avec l'identifiant de fonction du deuxième bloc logiciel exécuté par le deuxième moteur d'exécution.
